# EUROPEAN PATENT SPECIFICATION

(11) **EP 3 184 728 B1**
(45) Date of publication and mention of the grant of the patent: **23.05.2018**
(21) Application number: 15201831.3
(22) Date of filing: 22.12.2015
(51) Int. Cl.: E21B 7/00, E21B 10/44, A01K 97/01

(54) **ICE AUGER**
EISBOHRER
TARIÈRE À GLACE

(43) Date of publication of application: 28.06.2017
(73) Proprietor: Rapala Vmc Corporation, 17200 Vääksy (FI)
(72) Inventor: ROIKONEN, Jukka, 40900 Säynätsalo (FI); LEHTONEN, Samuel, 41800 Korpilahti (FI)
(74) Representative: Kolster Oy Ab

(56) References cited:
- US-A- 3 131 777
- US-A- 3 786 876
- US-A- 3 797 588

## Description

### Technical field

Generally, the invention relates to an ice auger, and more specifically the invention relates to a blade adjustment arrangement for ice augers.

### Background technology

An ice auger is an essential tool in winter fishing for drilling a bore hole through ice. Usually, a bore crown at the end of an ice auger comprises at least two cutting blades, which are arranged to cut ice, when a drive shaft is rotated. A helix provided in connection with the drive shaft lifts the cut ice and slush away from the bore hole.

Known problem of ice augers is that different ice conditions require various ice augers with different characteristics. When drilling hard ice, an ice auger having a steep inclination angle of cutting blades is useful, because it can bite hard the ice. In other ice conditions, the same ice auger may bite the ice too hard, which can make drilling very laborious. For that reason, a user typically needs two or three ice augers having different cutting blade characteristics.

Producing ice augers with various cutting blade characteristics, e.g. having different cutting blade inclination angles, may also be difficult. The inclination angle of a cutting blade is usually determined by sharpening angle of the blade or by the shaping of the bore crown. This may require several work phases and/or various molds.

Some prior art solutions with adjustable cutting characteristics have been presented in patent publications. US 3 786 876 presents a particular type of ice auger wherein at the end of the shaft instead of a bore crown there is a connector part for attaching cutting blades with particular connecting pieces to said connector and wherein pins are used to set the cutting angle. Further, US 3 797 588 discloses a solution where the crown of the auger is adjusted to set the blades fixed thereon. US 3 131 777 discloses a solution where also the whole crown with cutting edges is bent with a particular arrangement to set the crown at different angles.

### Summary of the invention

It is an object of the present invention to implement such a solution, that previously mentioned drawbacks of the prior art could be diminished. In particular, the invention is implied to solve how to provide a blade adjustment arrangement for ice augers suitable for different kinds of ice conditions.

The objective of the invention is met by the features disclosed in the independent patent claim.

A blade adjustment arrangement for ice augers according to the present invention is characterized by the features of claim 1.

According to an embodiment of the invention, an ice auger comprises an adjustment part arranged in connection with a cutting blade of said ice auger for adjusting cutting characteristic of the cutting blade. In one embodiment, the adjusted cutting characteristic of said cutting blade is adjusting an inclination angle of the cutting blade. In another embodiment, the adjusted characteristic of said cutting blade is limiting biting of said cutting blade by the form of said adjustment part. By adjusting the inclination angle of the cutting blade it can be selected how well the ice auger in question cuts ice. By limiting the biting of the cutting blade it can be affected how deep the cutting blade sinks into the ice. By limiting the biting may be possible to provide an ice auger that is lighter to use. Embodiments having both adjusted inclination angle and limited biting may provide an ice auger, which drills smoothly, but still efficiently, in every ice conditions.

The adjustment part is attached to said bore crown. In this way it may be possible to produce desired adjustment part and use existing molds for producing bore crowns. In an assembling phase, cutting blades and adjusting parts are attached to the bore crown.

In one embodiment, the adjustment part is molded to be part of a bore crown of the ice auger. In this way, it may be possible to produce a mold having suitable bore crown form and, in an assembling phase, attach cutting blades to the bore crown.

Yet, in another embodiment, the adjustment part is formed in the cutting blade. In this embodiment, a cutting blade is produced so that it comprises the adjustment part. In this way, it may be possible to use existing molds for bore crowns and, in assembling phase, attach the cutting blade with the adjustment part in the bore crown.

Some preferable embodiments of the invention are described in the dependent claims.

Significant advantages can be achieved with the present invention when compared to the prior art solutions. The inclination angle of the cutting blade may be adjusted by using the adjustment part of the present invention. In this case, an edge of cutting blades can be sharpened into the same inclination angle, which may simplify the producing process. Respectively, forming of the bore crown may be kept simple and, depending on embodiment, it may not have to be amended.

The invention in question may enable producing of an ice auger, which can be used in every ice condition and which is efficient for drilling a bore hole through ice, but which is light to use, however. In this way, a user may not have to buy several ice augers with various cutting blade characteristics, but one ice auger is sufficient for every ice type.

### Short description of the drawings

Next, the invention is described in more detail with reference to the appended drawings, in which
Fig. 1 illustrates a lower part of an ice auger according to an embodiment of the present invention,
Fig. 2 illustrates an explosion view of the ice auger in Fig. 1,
Fig. 3a illustrates a top view of an adjustment part according to an embodiment of the present invention,
Fig. 3b illustrates a bottom view of the adjustment part of Fig. 3a,
Fig. 3c illustrates a side view of the adjustment part of Fig. 3a,
Fig. 3d illustrates the adjustment part of Fig. 3a in a perspective view seen obliquely from below in one side of the adjustment part,
Fig. 3e illustrates the adjustment part of Fig. 3a in a perspective view seen obliquely from above in one side of the adjustment part,
Fig. 3f illustrates the adjustment part of Fig. 3a in a horizontal side view seen from one side of the adjustment part,
Fig. 3g illustrates the adjustment part of Fig. 3a in a perspective view seen obliquely from below in the other side of the adjustment part,
Fig. 3h illustrates the adjustment part of Fig. 3a in a perspective view seen obliquely from above in the other side of the adjustment part,
Fig. 3i illustrates the adjustment part of Fig. 3a in a horizontal side view seen from the other side of the adjustment part,
Fig. 4 illustrates a principle of defining the inclination angle of a cutting blade.

### Detailed description of the embodiments

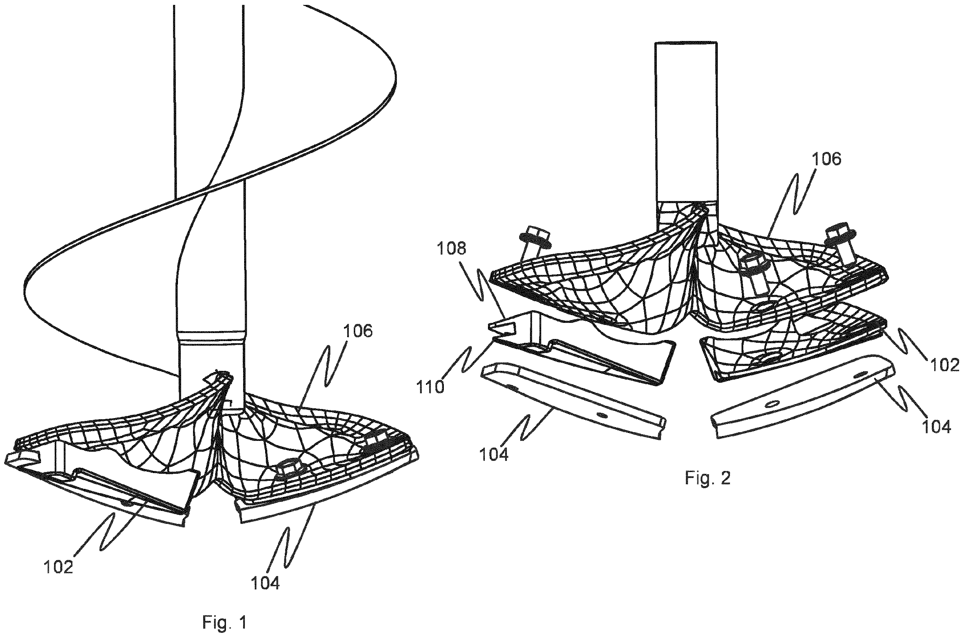

Fig. 1 illustrates a lower part of an ice auger according to an embodiment of the present invention and Fig. 2 illustrates an explosion view of the ice auger in Fig. 1. An ice auger according to the present invention comprises an adjustment part 102 arranged to be in connection with a cutting blade 104 of the ice auger. The cutting blade 104 and the adjustment part 102 are attached in a bore crown 106 of the ice auger.

In one embodiment, the adjustment part 102 of the present invention is preferably formed so that it comprises an upper part 108, which is placed between the bore crown 106 and the cutting blade 104, and a lower part 110, which is placed upon the back end of the cutting blade, in other words, covering a part of the cutting blade 104.

Depending on embodiment, the form of the adjustment part 102 can vary, and especially, the form of the lower part 110. Preferably, the lower part covers e.g. 50%-95% of the cutting blade, and more preferably e.g. 65%-85% of the blade.

In an embodiment, the inclination angle of the cutting blade is selected by forming the upper part 108 providing a desired inclination angle to the cutting blade. An upper surface of the upper part is set against the surface of the bore crown and, advantageously, the form of the upper surface corresponds the surface form of the bore crown. The lower surface of the upper part is set against the cutter blade, and, respectively, the form of the lower surface corresponds the surface form of the cutting blade.

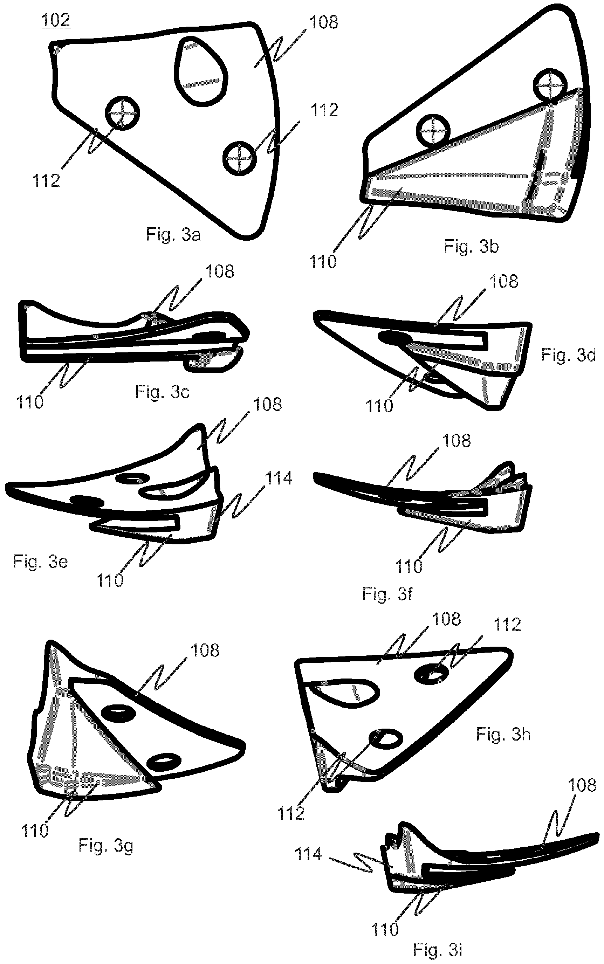

Figs. 3a-3i depict an adjustment part according to an embodiment of the present invention in top, bottom and side views, seen obliquely from below and above in one and the other side, as well as in a horizontal side view seen from both sides.

As can be seen in Figs. 3a and 3h, the upper part 108 preferably comprises holes 112 for attaching the adjustment part and the cutting blade to the bore crown by using fastening means of the ice auger, like screws, for example.

The lower part 110 of the adjustment part forms a heel 114 to the cutting blade, as can be seen in Figs. 3e and 3i. By selecting the thickness of the heel 114, it can be affected how deep the cutting blade bites the ice. When a cutter blade is set to a steeper inclination angle, the thickness of the heel 114 is selected to be thicker preventing the cutting blade to bite the ice to be drilled too deep. In a lower inclination angle, the thickness of the heel 114 can be less.

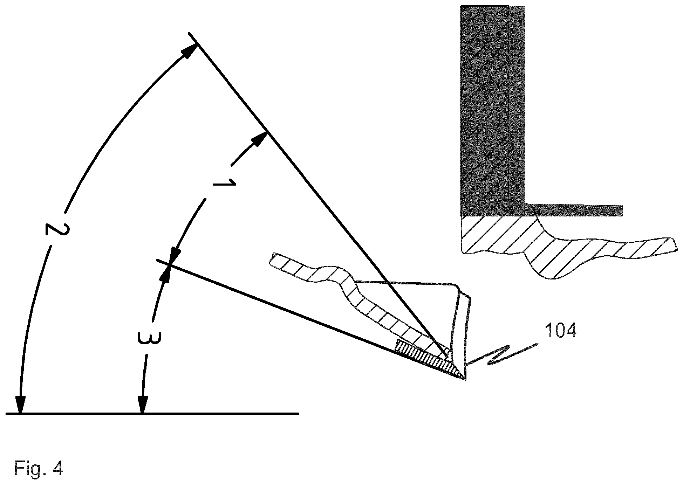

In Fig. 4, it is illustrated a principle of defining the inclination angle of a cutting blade 104. The angle 3 is the best to describe the inclination angle of a cutting blade. Because of function and the form of a bore crown, the angle 3 varies depending on the measuring point. As an exemplary definition of the inclination angle, the first measuring point *a* is a part nearest to the middle axis of the ice auger, the second measuring point *b* is in the middle of the cutting blade and the third measuring point c is a part farthest to the middle axis of the ice auger. As exemplary purposes only, the cutting blade can be said to have a lower inclination angle, i.e. being gently sloped, when *a* is about below 21°, *b* is about below 10° and *c* is about below 8°, for example. The steep inclination angle can be achieved, when the angle 3 in measuring points *a, b* and *c* exceeds previously mentioned values.

The form of the lower part can be selected so that the surface of the lower part does necessarily not have to be set against the surface of ice, when in a usage position, but only a part of the lower part is set against the surface of ice.

In embodiment depicted in Figs. 3a-i, the adjustment part is a separate part, which can be attached to the bore crown and the cutting blade. In another embodiment, the adjustment part is molded to be part of a bore crown. In an embodiment, the adjustment part formed in the bore crown comprises only upper part, and, in another embodiment, the adjustment part formed in the bore crown comprises both the upper part and the lower part.

Yet, in another embodiment, the adjustment part is formed in the cutting blade. In an embodiment, the adjustment part formed in the cutting blade comprises only upper part, and, in another embodiment, the adjustment part formed in the cutting blade comprises both the upper part and the lower part.

Combination of these embodiments are also possible having the upper part formed in the bore crown and the lower part formed in the cutting blade, for example, or having a separate upper part or lower part and forming the another part either in the bore crown or in the cutter blade. In an embodiment, the both the upper part and the lower part are separate parts connected together by fastening means of the ice auger, for example.

The scope of the invention is determined by the attached claims.

## Claims

1. A blade adjustment arrangement for ice augers comprising an adjustment part (102) arranged in connection with a cutting blade (104) and with an ice auger for adjusting cutting characteristic of the ice auger, wherein said adjustment part (102) is fixed at the underside of the ice auger bore crown (106) in between said crown (106) and the cutting blade (104) wherein said adjustment part (102) sets the cutting blade (104) to an angle in relation to the bore crown (106) of the ice auger, **characterised in that** the adjustment part (102) comprises an upper part (108), which is placed between the bore crown (106) and the cutting blade (104), and a lower part (110), which is placed upon the back end of the cutting blade such that the lower part (110) covers a part of the cutting blade (104), and
wherein the lower part (110) of the adjustment part forms a heel (114) to the cutting blade, and by selecting the thickness of the heel (114), it can be affected how deep the cutting blade bites the ice.

2. The blade adjustment arrangement according to claim 1, wherein said adjusted cutting characteristic is selecting an inclination angle of said cutting blade (104) in relation to the bore crown (106).

3. The blade adjustment arrangement according to any proceeding claim, wherein said adjusted cutting characteristic is limiting biting of said cutting blade (104) by the form of said adjustment part (102).

4. The blade adjustment arrangement according to any proceeding claim, wherein said adjustment part (102) is molded to be part of a bore crown (106) of said ice auger.

5. The blade adjustment arrangement according to any of claim 1-3, wherein said adjustment part (102) is formed to said cutting blade (104).

## Patentansprüche

1. Schneideneinstellungsanordnung für Eisbohrer, umfassend einen Einstellungsteil (102), der in Verbindung mit einer Schneidklinge (104) und mit einem Eisbohrer zum Einstellen der Schneidmerkmale des Eisbohrers angeordnet ist,
wobei der Einstellungsteil (102) an der Unterseite der Eisbohrer-Bohrkrone (106) zwischen der Krone (106) und der Schneidklinge (104) fixiert ist, wobei der Einstellungsteil (102) die Schneidklinge (104) auf einen Winkel in Relation zu der Bohrkrone (106) des Eisbohrers einstellt,
**dadurch gekennzeichnet, dass**
der Einstellungsteil (102) einen oberen Teil (108) umfasst, der zwischen der Bohrkrone (106) und der Schneidklinge (104) platziert ist, und einen unteren Teil (110), der auf dem hinteren Ende der Schneidklinge platziert ist, so dass der untere Teil (110) einen Teil der Schneidklinge (104) abdeckt, und
wobei der untere Teil (110) des Einstellungsteils einen Absatz an der Schneidklinge bildet, und durch Auswählen der Dicke des Absatzes (114) darauf Einfluss genommen werden kann, wie tief die Schneidklinge in das Eis schneidet.

2. Schneideneinstellungsanordnung nach Anspruch 1, wobei das eingestellte Schneidmerkmal einen Neigungswinkel der Schneidklinge (104) in Relation zu der Bohrkrone (106) auswählt.

3. Schneideneinstellungsanordnung nach einem der vorhergehenden Ansprüche, wobei das eingestellte Schneidmerkmal die Schneidtiefe der Schneidklinge (104) durch die Form des Einstellungsteils (102) einschränkt.

4. Schneideneinstellungsanordnung nach einem der vorhergehenden Ansprüche, wobei der Einstellungsteil (102) als Teil einer Bohrkrone (106) des Eisbohrers geformt wird.

5. Schneideneinstellungsanordnung nach einem der Ansprüche 1 bis 3, wobei der Einstellungsteil (102) an der Schneidklinge (104) ausgebildet ist.

## Revendications

1. Agencement de réglage de lame pour tarières à glace comprenant une pièce de réglage (102) disposée en connexion avec une lame de coupe (104) et avec une tarière à glace pour un réglage d'une caractéristique de coupe de la tarière à glace,
dans lequel une dite pièce de réglage (102) est fixée sur le dessous de la couronne de perçage (106) de la tarière à glace entre une dite couronne (106) et la lame de coupe (104)
dans lequel une dite pièce de réglage (102) règle la lame de coupe (104) selon un angle par rapport à la couronne de perçage (106) de la tarière à glace,
**caractérisé en ce que**
la pièce de réglage (102) comprend une partie supérieure (108), qui est placée entre la couronne de perçage (106) et la lame de coupe (104), et une partie inférieure (110), qui est placée sur l'extrémité arrière de la lame de coupe de sorte que la partie inférieure (110) couvre une partie de la lame de coupe (104), et
dans lequel la partie inférieure (110) de la pièce de réglage forme un talon (114) contre la lame de coupe, et en sélectionnant l'épaisseur du talon (114), il est possible d'affecter la profondeur d'attaque de la glace de la lame de coupe.

2. L'agencement de réglage de lame selon la revendication 1, dans lequel une dite caractéristique de coupe réglée correspond consiste en une sélection d'un angle d'inclinaison d'une dite lame de coupe (104) par rapport à la couronne de perçage (106).

3. L'agencement de réglage de lame selon l'une quelconque revendication de procédure, dans lequel une dite caractéristique de coupe réglée limite la profondeur d'attaque d'une dite lame de coupe (104) par la forme d'une dite pièce de réglage (102).

4. L'agencement de réglage de lame selon l'une quelconque revendication de procédure, dans lequel une dite pièce de réglage (102) est moulée pour s'intégrer à une couronne de perçage (106) d'une dite tarière à glace.

5. L'agencement de réglage de lame selon l'une quelconque des revendications 1 à 3, dans lequel une dite pièce de réglage (102) est formée pour une dite lame de coupe (104).
